# EUROPEAN PATENT SPECIFICATION

(11) **EP 1 091 480 B1**
(45) Date of publication and mention of the grant of the patent: **21.09.2005**
(21) Application number: 99830619.5
(22) Date of filing: 30.09.1999
(51) Int. Cl.: H02P 6/18

(54) **Jitter free detection of current or voltage on a PWM driven winding**
Zitterfreie Erkennung von Strom- oder Spannungs-Signalen an mit Pulswechselmodulation betriebener Wicklung
Détection des signaux de courant ou de tension dérivé sans guige d'un enroulement commandé par modulation de largeur d' impulsions

(43) Date of publication of application: 11.04.2001
(73) Proprietor: STMicroelectronics S.r.l., 20041 Agrate Brianza (Milano) (IT)
(72) Inventor: Galbiati, Ezio, 26020 Agnadello (IT); Boscolo, Michele, 30019 Sottomarina (IT); Viti, Marco, 20010 Cornaredo (IT)
(74) Representative: Pellegri, Alberto

(56) References cited:
- US-A- 5 517 095
- US-A- 5 767 654
- US-A- 5 793 183
- US-A- 5 969 491

## Description

### FIELD OF THE INVENTION

The present invention relates in general to the monitoring of the instantaneous value of electrical signals and in particular to the measurement of a voltage or a current in a PWM switchingly driven winding.

### BACKGROUND OF THE INVENTION

In devices with PWM switchingly driven windings such as static converters or induction machines, it may be necessary to precisely measure the instantaneous value of some significant electrical magnitude such as the current or the back electromotive force (BEMF), and more specifically individuate the zero-cross instant of these generally alternate signals. Detection of the zero current condition in an inductor of a converter is fundamental for switching on the power device when the current in the inductor has completely decayed. Moreover, the zero-cross detection of back electromotive forces in the windings of induction motors may be useful to synchronize the phase switchings with the rotor's position such to produce the maximum and most uniform torque.

Detection of the crossing instants of pre-established threshold values by alternate electrical signals may be always conveniently made by shifting the level of the signal by an amount equal to and of sign opposite of the threshold value and detecting the zero-cross instants of the level-shifted signal. Given that detection of the crossing instants of a certain threshold value by an electrical signal is equivalent to detecting the zero cross instants of a suitably level shifted signal, the ensuing description will refer only to the detection of zero-cross events.

Substantially, the detection of the zero-cross of a BEMF or of the current flowing in a winding may be carried out in a very similar way for both the voltage or current signals. For example, the BEMF may be detected by a comparator coupled to the winding terminals, or the zero-cross event of the current may be detected by converting the current signal in a voltage signal on a current sensing resistor in series to the winding and coupling a comparator to the terminals of the current sensing resistor. As it will be readily recognized, the problems that may be encountered are generally the same and may be solved in the same manner.

The method of the invention is useful for detecting signals on any PWM driven winding, and may be implemented in a large number of different devices, such as for example in DC-DC converters, in induction machines in general, and more specifically in brushless motors.

In consideration of the importance of a correct reading of the BEMF zero-cross instants in sensorless brushless-DC motors as a way of correctly determining the rotor's position, by way of example only, the method of the invention will be described with reference to such a prominent application.

The brushless motor consists of a permanent magnet rotor and a stator composed of a number of windings which may be connected in a star configuration, in a polygon (delta) configuration, or even independently from the one another.

Star or polygon configurations may have a number of externally accessible terminals equal the number of phase windings of the motor (eventually with an additional terminal if the star center is made accessible). Alternatively, in case of motors with independent phase windings both terminals of all the phase windings are accessible.

Electronically switched DC motors are widely used in so-called Hard Disk, CD and DVD drives, as tape drive motors in video recorders, and the like.

In case of threephase motors, the driving and control system may be an integrated circuit that includes also a power stage for driving the phase windings and which may also comprise either a full-wave threephase half-bridge circuit in the case of star or triangle connected motors, or three full bridges circuits in the case of motors with independently driven windings.

The most common driving mode is referred to as "bipolar" and is characterized in that at each instant, two windings are driven while the third is inactive (e.g. the output of the relative bridge or half-bridge in a state of high impedance or tristate).

The phases are switched according to a cyclic sequence, synchronized with the rotor's instantaneous position that, in a bipolar driving system, may be easily detected by monitoring the BEMF in the phase winding that in the current phase is tristate, or by Hall effect sensors (a solution seldom used owing to its higher cost). In case of monitoring the BEMF, it is a common practice to detect the zero-cross instants of its periodic waveform.

The European patent applications EP 822649 and EP 892489, the latter having been filed prior to and published after the date of filing of the present application, in the name of the same applicant, describe different techniques for synchronizing the phase switchings.

The document US 5,793,183, upon which the preamble of independent claims is based, discloses a method and a relative motor control circuit for controlling a brushless sensorless motor in PWM mode in which the PWM switching is temporarily stopped whenever a zero crossing is expected.

The document US 5,517,095 discloses a method and a circuit for operating a sensorless DC motor, that inhibits the detection of zero-crossing in coincidence of expected zero-crossings to avoid spurious zero-crossing detections.

The comparators that are normally used to monitor the BEMF in question may be gravely affected by the switching noise, and in order to prevent the generation of spurious switchings of the outputs of the comparators it is known to mask the outputs of the comparators. For example, a suitable masking circuit may be realized with an AND gate coupled to the output of the voltage comparator and with a masking signal, to prevent the propagation of a zero-cross event detection sginal for a time interval (defined by the duration of the masking pulse) after each phase switching.

It is also common to filter the high frequency noise introduced by the PWM signal on the BEMF and thereafter compare the filtered value with the zero value in order to enhance the precision of the zero cross detection.

Such a solution introduces phase errors and, in some cases, undesired nonsystematic errors.

Such errors increase the jitter of the speed of the motor.

### SUMMARY OF THE INVENTION

It has now been found and is the object of the present invention a method for detecting with more precision the zero-cross instants of an induced voltage or of a current in a PWM driven winding.

The method of the present invention consists in
storing the value of the time interval between the last two consecutive zero-cross events detected;
synchronizing the PWM driving signal at the end of a time interval from the last detected zero-cross equal to the difference between a time established in function of said stored value and a first prefixed value;
if a zero-cross is not detected within said established time interval, the switching of the PWM signal is disabled for a time interval of maximum duration equal to a second prefixed value or until the occurrence of a new zero-cross.

According to a first embodiment of the invention, the method is implemented by establishing said time equal to the time elapsing between two consecutive zero-cross events.

This embodiment is very simple but may be too sensible to casual variations of the zero-cross instants. Moreover, in case of PWM driven motors, fabrication asymmetrics as well as other factors may cause spurious sign variations in the succession of zero-cross events.

In a preferred embodiment of the invention, the time interval is established equal to the arithmetic mean of the time elapsing between two consecutive zero-cross events, calculated from a certain number of terms of the succession by storing them, for example in a FIFO (first-in-first-out) mode in a shift register. In this way, the time so calculated is free from stochastic errors that are sufficiently eliminated.

A further improvement of the method of the invention, particularly effective in driving motors, consists in calculating the established time interval between zero-cross events by a linear prediction (for example a linear regression) or a non linear (for example a polynomial regression) method applied to said certain number of stored terms of the succession of time intervals between zero-cross events.

Therefore, the system is capable to discriminate between the different phases of the motor's functioning: acceleration, run at a constant speed and deceleration, and estimates with a good precision the instant at which the next zero-cross should occur.

According to a most preferred embodiment of the invention, whichever of the above noted approaches is used said prefixed value (T1) is chosen so that the zero-cross will occurs during the second half of the time interval between two consecutive fronts of the PWM driving signal.

For example, in brushless-DC sensorless motors it is possible to achieve a remarkable reduction of the jitter on the motor's speed though a residual jitter due to other causes such as inevitable fabrication asymmetries of the motor remains.

A hardware implementation of the method of the invention for a jitter-free zero-cross detection of a back electromotive force (BEMF) or of the current in a winding of a polyphase brushless-DC motor, may include at least a comparator of the BEMF or of the current with zero producing a first logic signal at each zero-cross or null current event, a masking circuit of the first logic signal controlled by a second logic signal and producing a third logic signal, a generator of a PWM driving signal generating said second logic signal, and a control circuit receiving said third logic signal and controlling said generator of the PWM driving signal, characterized in that said control circuit has
means cyclically storing the value of the time interval between the last two zero-cross events detected;
means synchronizing said PWM driving signal at the end of a time interval starting from the last zero-cross event and having a duration equal to the difference between an established time in function of said stored value and a first pre-fixed value;
means disabling the switching of the PWM signal for a time of maximum duration is equal to a second pre-fixed value or until the occurrence of a new zero-cross event, in case of a new zero-cross event is not detected within a time interval equal to the established time.

### BRIEF DESCRIPTION OF THE DRAWINGS

The various aspects and advantages of the method of the invention will became clearer through the following description of a preferred embodiment and by referring to the attached drawings, wherein:
**Figure 1** shows a full-wave threephase bridge and a brushless-DC threephase motor connected to it;
**Figure 2a** is a scheme showing the connections between a threephase brushless motor and a comparator for detecting the zero-crosses of the back electromotive force (BEMF);
**Figure 2b** illustrates the waveforms of the BEMF signal in proximity of a zero-cross;
**Figure 3** illustrates the masking circuit of the spurious spikes and relative functioning by way of a diagram of the signals;
**Figure 4a** illustrates by way of a diagram an example of detection of a zero-cross after an established time ;
**Figure 4b** illustrates by way of a diagram the detection of a zero-cross that disables the switching of the PWM signal for a time shorter than the allowed maximum time;
**Figure 4c** illustrates with a temporal diagram the detection of the zero-cross that disables the switching of the PWM signal for the entire allowed maximum time;
**Figure 5** illustrates a first embodiment of the invention applied to a brushless-DC polyphase motor;
**Figure 6** illustrates another embodiment of the present invention applied to a brushless-DC polyphase motor.

### DESCRIPTION OF SEVERAL EMBODIMENTS OF THE INVENTION

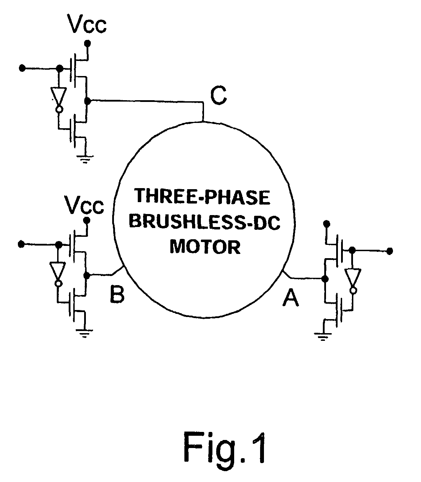

For analyzing embodiments of the invention reference will be made to a threephase brushless motor in which the phase switchings are effected through half-bridge output stages, as shown in figure 1. The concepts herein presented are also applicable to any other polyphase brushless motor with windings connected in a star configuration or according to any other scheme.

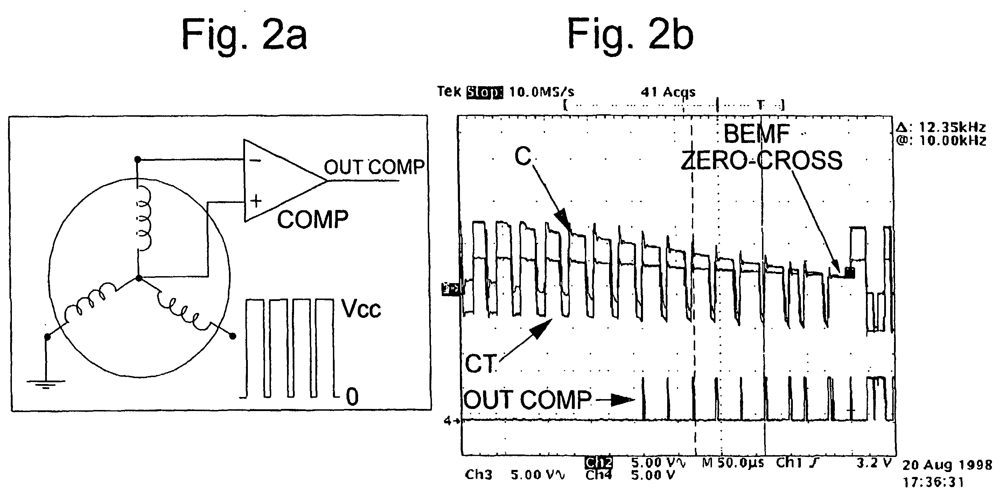

In case of a DC brushless motor with star connected windings, the BEMF induced on one of the windings may be compared with zero by coupling, according to the scheme shown in figure 2a, a phase winding terminal C and the star center CT to a comparator COMP for producing an OUTCOMP logic signal after having placed in a high impedance condition (tristate) winding while a substantially square-wave power signal is being applied to the phase winding A with the phase winding B is coupled to a reference potential.

Figure 2b shows the waveforms of the CT voltage as well as of the voltage on the phase winding C. At the instant in which these two voltages coincide, the BEMF on the phase winding C is null and the system detects a zero-cross event. However, as it may be noticed, the voltage comparator COMP produces spikes at each switching of the half bridges power stages in absence of any masking circuit.

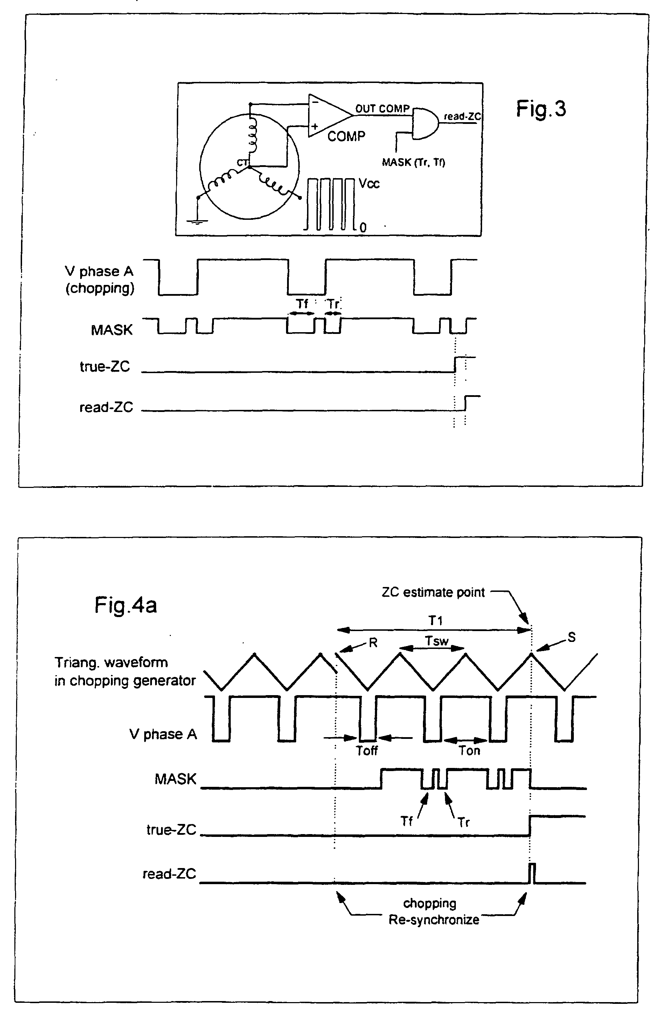

To avoid that these switching spikes affect the correctness of the detection of the zero-cross instant, a commonly known circuital solution illustrated in figure 3 may be adopted.

In cascade to the voltage comparator COMP there is a masking circuit, which in the example shown is composed of an AND gate to the input of which are coupled the output signal OUTCOMP of the voltage comparator and a MASK signal. A diagram of the driving PWM driving signal of a phase winding and of the masking signal MASK is also shown. The masking signal MASK is rised at every front of the PWM signal, preventing detection of a zero-cross event.

If a zero-cross occurs immediately after a front of the driving PWM signal, as in the example shown in figure 3, where the transition of the TRUE_ZC signal that identifies the exact zero-cross instant occurs immediately after a rising front of the PWM signal, it will not be immediately detected by the system because the MASK signal is active. Therefore, the zero-cross will be detected with a certain delay (READ_ZC front) in respect to the instant in which it really occurs (TRUE_ZC front), that is when the MASK signal ceases to exist.

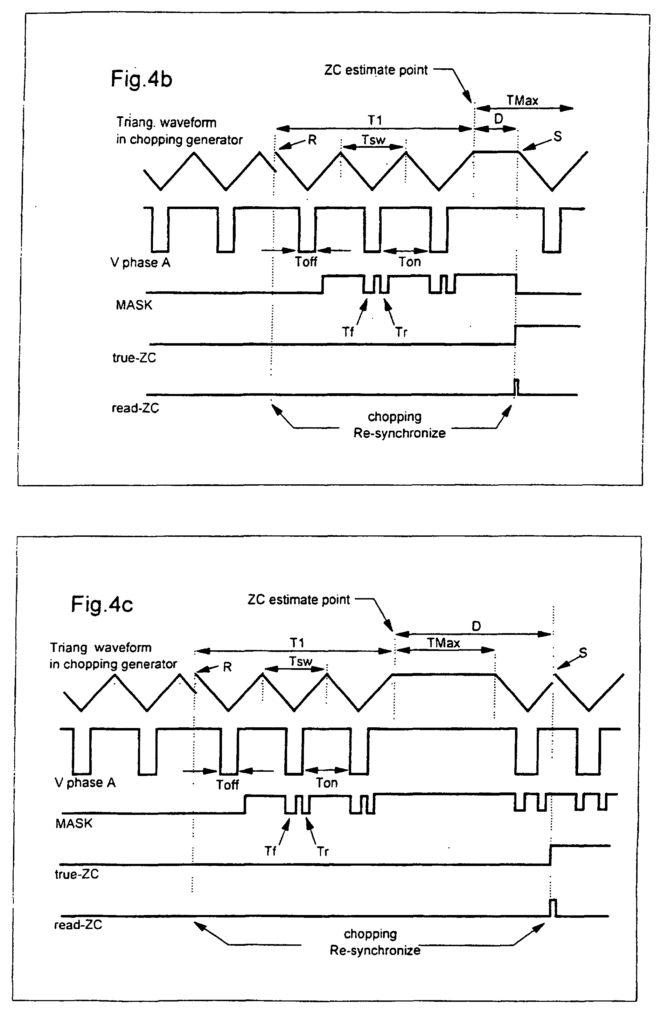

The way the method of the invention overcomes this problem may be seen in figures 4a, 4b and 4c.

These figures show possible waveforms of the driving voltage applied to a phase winding (V phase A) of the MASK signal that highlights the Tf and Tr instants of the masking that is effected in correspondence of the falling and rising edges of the PWM driving signal, of the TRUE_ZC signal indicating the occurred zero-cross and of the READ_ZC signal indicating the instant of detection of the zero-cross.

The system of the invention estimates the instant in which the next zero-cross should occur (ZC-ESTYIMATE_POINT) by calculating the time interval between two consecutive zero-cross detections. Subsequently, it synchronizes the PWM driving signal at an instant T1 before the forecasted next TRUE_ZC instant, for example starting from a first prefixed amplitude value R the triangular wave that generates the PWM signal.

The value of this anticipation interval of time T1 is shorter than the time interval elapsing between the last two zero-cross events detected, and may be chosen such that the estimated instant of the next zero-cross does not fall within a masking interval. For example, such a time T1 may be established equal to three periods of the PWM signal.

The zero-cross event may occur at the estimated instant, as illustrated in figure 4a, or may be delayed by a time D, shorter or longer than a maximum permitted duration Tmax, as shown in the example of figures 4b and 4c, respectively.

If the new zero-cross occurs at the estimated instant, as in the example of figure 4a, the control circuit simply synchronizes the triangular wave that generates the PWM driving signal, starting from a second prefixed amplitude value S, which may even be equal to the first value R.

If expected zero-cross event does not occur during the interval T1, the system disables the switching of the PWM driving signal, maintaining the configuration of the output stages at the instant ZC_ESTIMATE_POINT, until a zero-cross eventually occurs, as shown in figure 4b, otherwise until a maximum time interval TMAX has elapsed, as shown in figure 4c. Thereafter the control circuit synchronizes the driving PWM signal by restarting the triangular wave that generates it.

The switching of the PWM driving signal is disabled, leaving the system on a wait state of the zero-cross event in order to introduce a safety band within which the zero-cross may occur and be in any case immediately detected.

This procedure enhances the precision of the system because, due to different causes such as hardly evitable construction asymmetries of the motor, the zero-cross instant may indeed be subject to unpredictable phase shifts in respect to the estimated instant. Should not the system disable the switching of the PWM signal, there may be a case of a zero-cross event immediately following a front of the PWM signal itself:,the zero-cross instant of the BEMF would in such a case occur during a masking interval and be detected only at the end of the masking interval.

In order to minimize the jitter caused by inevitable asymmetries of the motor, the synchronism of the PWM driving signal may be forced to a prefixed value S even at the instant in which the real zero-cross instant is detected. Hence, the output bridge configuration is made systematically correct at the instants in which the real rotor's position is known. This procedure improves the general behavior of the system.

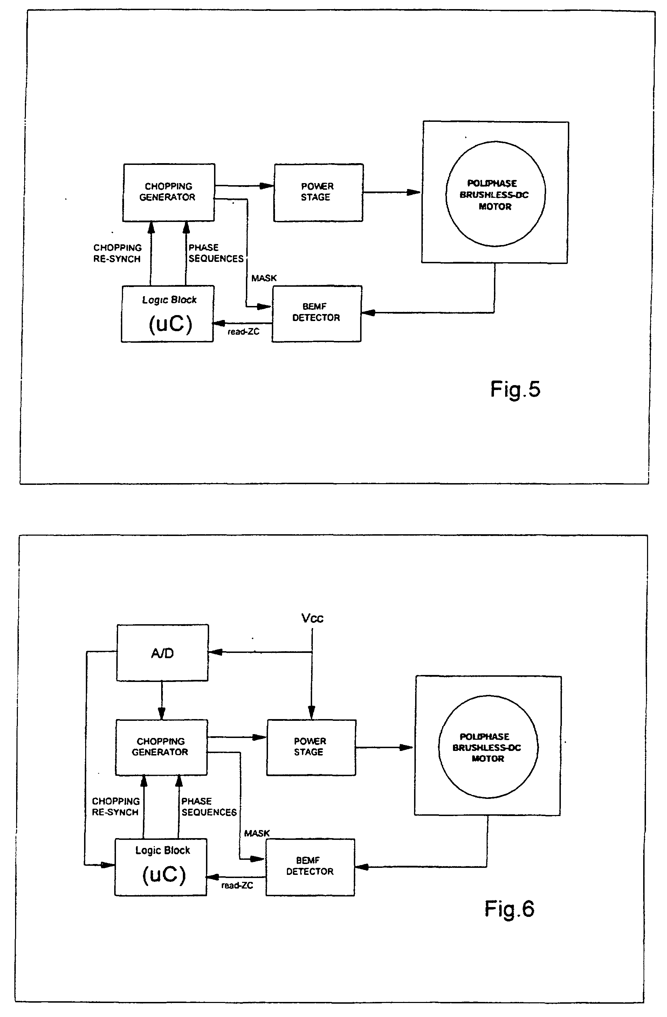

A possible block diagram of the whole system is shown in figure 5.

This illustration refers to the case of a DC brushless-DC polyphase motor powered through a POWER STAGE, a CHOPPING GENERATOR drives the power stage and generates the MASK signal, a back electromotive force sensing circuit BEMF_DETECTOR coupled to the brushless motor produces a logic pulse READ_ZC at every detected zero-cross event. A microcontroller µC controls by way of the commands CHOPPING_RE and PHASE_SEQUENCE, respectively, the synchronization and the application of the PWM driving signal to the phase windings, stores the interval TC between successive zero-cross events, calculates the instant in which the occurrence of a new zero-cross is expected, and effects at an anticipated instant T1 before the expected zero cross a synchronization of the CHOPPING_GENERATOR.

Another circuit embodying the invention is schematically shown in figure 6.

The block diagram is similar to the one illustrated in figure 5 and includes further a system for compensating eventual variations of the supply voltage. This additional system consists of an A/D converter, of the supply voltage, whose output is read by the controller that compensates voltage variations. The A/D converter's output is used to compute anticipation the time interval T1 as well as the prefixed values R and S of the triangular waveform of the PWM generator.

## Claims

1. A method of detecting the zero-cross event of an induced back electromotive force or of the nullification instant of a periodic current in a PWM driven winding, comprising the step of
temporarily causing a PWM driving signal not to switch in a time interval determined in function of the instant of an expected zero-cross event,
**characterized in that** it further comprises the steps of:
storing the value (TC) of the time interval between the last two events of zero-cross detected;
synchronizing the PWM driving signal at the end of a time interval starting from the instant of the last detected zero-cross event and of duration equal to the difference between an established time (TS) based upon said stored value (TC) and a first prefixed value (T1); and
if a new zero-cross event is not detected within said established time (TS), disabling the switching of the PWM signal for a time interval, the maximum duration of which is equal to a second prefixed value or until the occurrence of a new zero-cross event.

2. The method of claim 1, wherein said first established time (TS) is equal to said stored value (TC).

3. The method of claim 1, wherein said established time (TS) is equal to the arithmetic mean of a certain number of terms of a succession of stored values (TC) of the time intervals between consecutive zero-cross events.

4. The method of claim 1, wherein said established time (TS) is calculated by a linear or non linear regression method from said number of terms of the succession of stored values (TC) of the time intervals between consecutive zero-cross events.

5. The method according to any of the preceding claims wherein said first prefixed value (T1) is chosen such that the next zero-cross is expected during the second half of the interval between two consecutive fronts of said PWM driving signal.

6. A jitter free detection system of the zero-cross of an induced back electromotive force or of the nullification instant of a periodic current in a PWM driven sensorless and brushless polyphase motor comprising at least a comparator for comparing the back electromotive force or ef-the current with the zero value and producing a first logic signal (OUTCOMP) at each zero-cross occurrence, a generator of a PWM driving signal (CHOPPING GENERATOR) driving an output stage (POWER STAGE) coupled to the windings of the motor, a control logic (µC) controlling said PWM driving signal generator (CHOPPING GENERATOR), **characterized in that** said control logic (µC) includes
means for storing the value (TC) of the interval between the two last zero-cross events detected;
means for synchronizing the PWM driving signal at the end of an interval of time starting from the instant of the last detected zero-cross event, and of duration equal to the difference between an established time (TS) based upon said stored value (TC) and first prefixed value (T1);
means for disabling the switching of the PWM signal for a time interval of maximum duration equal to a second prefixed value or until the occurrence of a new zero-cross event in case a new zero-cross event is not detected within said established time (TS).

7. The system of claim 6, wherein said established time (TS) is equal to said stored value (TC).

8. The system of claim 6, wherein said established time (TS) is equal to the arithmetic mean of a certain number of terms of a succession of stored values (TC) of the intervals between consecutive zero-cross events.

9. The system of claim 6, wherein said established time (TS) is calculated by a linear or non linear regression method from said number of terms of the succession of stored values (TC) of the time interval between consecutive zero-cross events.

10. The system according to any of the claims 6 to 9, wherein said first prefixed value (T1) is choosen such that the next zero-cross is expected during the second half of the interval between two consecutive fronts of said PWM driving signal.

## Patentansprüche

1. Verfahren zur Detektion des Nulldurchgangsereignisses einer induzierten elektromotorische Gegenkraft oder des Nullungsmoments eines periodischen Stroms in einer pulsweitenmodulationsbetriebenen Wicklung, das den Schritt aufweist
vorrübergehendes Bewirken, daß ein Pulsweitenmodulationstreibersignal in einem Zeitintervall nicht umschaltet, das als Funktion des Moments eines erwarteten Nulldurchgangsereignisses festgelegt wird,
**dadurch gekennzeichnet, daß** es ferner die Schritte aufweist:
Speichern des Wertes (TC) des Zeitintervalls zwischen den letzten beiden detektierten Nulldurchgangsereignissen;
Synchronisieren des Pulsweitenmodulationstreibersignals mit dem Ende eines Zeitintervalls, das von dem Moment des letzten detektierten Nulldurchgangs beginnt und das eine Dauer hat, die gleich der Differenz zwischen einer festgelegten Zeit (TS) ist, die auf dem gespeicherten Wert (TC) und einem ersten vorher festgesetzten Wert (T1) beruht;
und wenn kein neues Nulldurchgangsereignis innerhalb der festgelegten Zeit (TS) detektiert wird, Sperren des Umschaltens des Pulsweitenmodulationssignals für ein Zeitintervall, dessen maximale Dauer gleich einem zweiten vorher festgesetzten Wert ist oder bis zum Auftreten eines Nulldurchgangsereignisses.

2. Verfahren nach Anspruch 1, wobei die erste festgelegte Zeit (TS) gleich dem gespeicherten Wert (TC) ist.

3. Verfahren nach Anspruch 1, wobei die festgelegte Zeit (TS) gleich dem arithmetischen Mittel einer bestimmten Anzahl von Termen einer Folge von gespeicherten Werten (TC) der Intervalle zwischen aufeinanderfolgenden Nulldurchgangsereignissen ist.

4. Verfahren nach Anspruch 1, wobei die festgelegte Zeit (TS) durch ein lineares oder nicht lineares Regressionsverfahren aus der Anzahl der Terme der Folge gespeicherter Werte (TC) der Zeitintervalle zwischen aufeinanderfolgenden Nulldurchgangsereignissen berechnet wird.

5. Verfahren nach einem der vorhergehenden Ansprüche, wobei der erste vorher festgesetzte Wert (T1) so gewählt wird, daß der nächste Nulldurchgang während der zweiten Hälfte des Intervalls zwischen zwei aufeinanderfolgenden Fronten des Pulsweitenmodulationstreibersignals erwartet wird.

6. Zitterfreies Detektionssystem des Nulldurchgangs einer induzierten elektromotorischen Gegenkraft oder des Nullungsmoments eines periodischen Stroms in einem pulsweitenmodulationsbetriebenen sensorlosen und bürstenlosen Mehrphasenmotor mit mindestens einem Komparator zum Vergleich der elektromotorischen Gegenkraft oder des Stroms mit dem Nullwert und zum Erzeugen eines ersten Logiksignals (OUTCOMP) bei jedem Nulldurchgangereignis, einem Generator eines Pulsweitenmodulationstreibersignals (CHOPPING GENERATOR), der eine Ausgangsstufe (POWER STAGE) treibt, die an die Wicklungen des Motors gekoppelt ist, einer Steuerlogik (µC), die den Pulsweitenmodulationstreibersignalgenerator (CHOPPING GENERATOR) steuert, **dadurch gekennzeichnet, daß** die Steuerlogik (µC) aufweist:
eine Einrichtung zur Speicherung des Werts (TC) des Intervalls zwischen den beiden letzten detektierten Nulldurchgangsereignissen;
eine Einrichtung zur Synchronisation des Pulsweitenmodulationstreibersignals mit dem Ende eines Zeitintervalls, das von dem Moment des letzten detektierten Nulldurchgangs beginnt und das eine Dauer hat, die gleich der Differenz zwischen einer festgelegten Zeit (TS) ist, die auf dem gespeicherten Wert (TC) und einem ersten vorher festgesetzten Wert (T1) beruht;
eine Einrichtung zur Sperrung des Umschaltens des Pulsweitenmodulationssignals für ein Zeitintervall mit einer maximalen Dauer, die gleich einem zweiten vorher festgesetzten Wert ist, oder bis zum Auftreten eines neuen Nulldurchgangsereignisses, falls kein neues Nulldurchgangsereignis in der festgelegten Zeit (TS) detektiert wird.

7. System nach Anspruch 6, wobei die festgelegte Zeit (TS) gleich dem gespeicherten Wert (TC) ist.

8. System nach Anspruch 6, wobei die festgelegte Zeit (TS) gleich dem arithmetischen Mittel einer bestimmten Anzahl von Termen einer Folge von gespeicherten Werten (TC) der Intervalle zwischen aufeinanderfolgenden Nulldurchgangsereignissen ist.

9. System nach Anspruch 6, wobei die festgelegte Zeit (TS) durch ein lineares oder nicht lineares Regressionsverfahren aus der Anzahl der Terme der Folge gespeicherter Werte (TC) des Zeitintervalls zwischen aufeinanderfolgenden Nulldurchgangsereignissen berechnet wird.

10. System nach einem der Ansprüche 6 bis 9, wobei der erste vorher festgesetzte Wert (T1) so gewählt wird, daß der nächste Nulldurchgang während der zweiten Hälfte des Intervalls zwischen zwei aufeinanderfolgenden Fronten des Pulsweitenmodulationstreibersignals erwartet wird.

## Revendications

1. Procédé de détection d'un évènement de passage à zéro d'une force contre-électromotrice induite ou d'un instant d'annulation d'un courant périodique dans un enroulement excité en PWM comprenant l'étape suivante :
amener temporairement un signal d'excitation PWM à ne pas commuter dans un intervalle de temps déterminé en fonction de l'instant d'un évènement de passage à zéro attendu ;
**caractérisé en ce qu'**il comprend en outre les étapes suivantes :
mémoriser la valeur (TC) de l'intervalle de temps entre les deux derniers évènements de passage à zéro détectés ;
synchroniser le signal d'excitation PWM sur la fin d'un intervalle de temps à partir de l'instant du dernier évènement de passage à zéro détecté et de durée égale à la différence entre une durée établie (TS) basée sur la valeur mémorisée (TC) et une première valeur prédéterminée (T1) ; et
si un nouvel évènement de passage à zéro n'est pas détecté à l'intérieur d'une durée établie (TS), invalider la commutation du signal PWM pendant un intervalle de temps dont la durée maximale est égale à une seconde valeur prédéterminée ou jusqu'à l'apparition d'un nouvel évènement de passage à zéro.

2. Procédé selon la revendication 1, dans lequel la première durée établie (TS) est égale à la valeur mémorisée (TC).

3. Procédé selon la revendication 1, dans lequel la durée établie (TS) est égale à la moyenne arithmétique d'un certains nombres de termes d'une succession de valeurs mémorisées (TC) des intervalles de temps entre des évènements de passage à zéro successifs.

4. Procédé selon la revendication 1, dans lequel la durée établie (TS) est calculée par un procédé de régression linéaire ou non linéaire à partir du nombre de termes de la succession de valeurs mémorisées (TC) des intervalles de temps entre évènements de passage à zéro successifs.

5. Procédé selon l'une quelconque des revendications précédentes, dans lequel la première valeur prédéterminée (T1) est choisie de sorte que le passage à zéro suivant est attendu pendant la seconde moitié de l'intervalle entre deux fronts successifs du signal d'excitation PWM.

6. Système de détection sans gigue du passage à zéro d'une force contre électromotrice induite ou de l'instant d'annulation d'un courant périodique dans un moteur polyphasé sans capteur et sans collecteur excité par PWM comprenant au moins un comparateur pour comparer la force contre électromotrice ou le courant avec la valeur nulle et produire un premier signal logique (OUTCOMP) à chaque survenance d'un passage à zéro, un générateur de signal d'excitation PWM (CHOPPING GENERATOR) pilotant un étage de sortie (POWER STAGE) couplé aux enroulements du moteur, une logique de commande (µC) commandant le générateur de signal d'excitation PWM (CHOPPING GENERATOR), **caractérisé en ce que** la logique de commande (µC) comprend :
des moyens pour mémoriser la valeur (TC) de l'intervalle entre les deux derniers évènements de passage à zéro détectés ;
des moyens pour synchroniser le signal d'excitation PWM sur la fin d'un intervalle de temps à partir de l'instant du dernier évènement de passage à zéro détecté et d'une durée égale à la différence entre une durée établie (TS) sur la base de la valeur mémorisée (TC) et de la première valeur prédéterminée (T1) ; et
des moyens pour invalider la commutation du signal d'excitation PWM pendant un intervalle de temps de durée maximum égale à la seconde valeur prédéterminée ou jusqu'à l'apparition d'un nouvel évènement de passage à zéro dans le cas où un nouvel évènement de passage à zéro n'est pas détecté à l'intérieur de la durée établie (TS).

7. Système selon la revendication 6, dans lequel la première durée établie (TS) est égale à la valeur mémorisée (TC).

8. Système selon la revendication 6, dans lequel la durée établie (TS) est égale à la moyenne arithmétique d'un certains nombres de termes d'une succession de valeurs mémorisées (TC) des intervalles de temps entre des évènements de passage à zéro successifs.

9. Système selon la revendication 6, dans lequel la durée établie (TS) est calculée par un procédé de régression linéaire ou non linéaire à partir du nombre de termes de la succession de valeurs mémorisées (TC) des intervalles de temps entre évènements de passage à zéro successifs.

10. Procédé selon l'une quelconque des revendications 6 à 9, dans lequel la première valeur prédéterminée (T1) est choisie de sorte que le passage à zéro suivant est attendu pendant la seconde moitié de l'intervalle entre deux fronts successifs du signal d'excitation PWM.
